# EUROPÄISCHE PATENTANMELDUNG

(11) **EP 2 048 395 A2**
(43) Veröffentlichungstag der Anmeldung: **15.04.2009**
(21) Anmeldenummer: 08165895.7
(22) Anmeldetag: 06.10.2008
(51) Int. Cl.: F16D 3/77

(54) **Scheibe zur Übertragung eines Drehmoments in einer Drehmomentübertragungsvorrichtung eines Kraftfahrzeugs**

(30) Priorität: 13.10.2007 DE 102007049215; 12.09.2008 DE 102008042026
(71) Anmelder: ZF Friedrichshafen AG, 88038 Friedrichshafen (DE)
(72) Erfinder: Weigand, Thomas, 97421 Schweinfurt (DE)

(57) **Zusammenfassung**

Die Erfindung betrifft eine Scheibe (1) zur Übertragung eines Drehmoments in einer Drehmomentübertragungsvorrichtung eines Kraftfahrzeugs, wobei die Scheibe (1) einen radial inneren Bereich (2) aufweist, der mit einem ersten Bauteil verbindbar ist, wobei die Scheibe (1) einen radial äußeren Bereich (3) aufweist, der mit einem zweiten Bauteil verbindbar ist, wobei die Scheibe (1) zum Verbinden des radial äußeren Bereichs (3) mit dem zweiten Bauteil eine Anzahl Bohrungen (4) für den Durchtritt von Befestigungselementen aufweist und wobei die Scheibe (1) im Bereich zwischen dem radial inneren Bereich (2) und den radial äußeren Bereich (3) eine Kröpfung (5) aufweist, die die beiden Bereiche (2, 3) in axiale Richtung (a) relativ zueinander versetzt. Um in preiswerter Weise bei der Befestigung der Scheibe eine Nietverbindung einsetzen zu können, die eine hohe Lebensdauer aufweist, sieht die Erfindung vor, dass im Bereich (6) der Kröpfung (5) mindestens eine Ausnehmung (7) in die Scheibe (1) eingearbeitet ist.

## Beschreibung

Die Erfindung betrifft eine Scheibe zur Übertragung eines Drehmoments in einer Drehmomentübertragungsvorrichtung eines Kraftfahrzeugs, wobei die Scheibe einen radial inneren Bereich aufweist, der mit einem ersten Bauteil verbindbar ist, wobei die Scheibe einen radial äußeren Bereich aufweist, der mit einem zweiten Bauteil verbindbar ist, wobei die Scheibe zum Verbinden des radial äußeren Bereichs mit dem zweiten Bauteil eine Anzahl Bohrungen für den Durchtritt von Befestigungselementen aufweist und wobei die Scheibe im Bereich zwischen dem radial inneren Bereich und den radial äußeren Bereich eine Kröpfung aufweist, die die beiden Bereiche in axiale Richtung relativ zueinander versetzt.

Eine Scheibe dieser Art ist aus der DE 41 17 580 C2 bekannt. Dort ist ein geteiltes Schwungrad als Bestandteil des Antriebsstrangs eines Kraftfahrzeugs beschrieben, wobei eine als membranartiges Bauteil bezeichnete Scheibe zum Einsatz kommt. Diese Scheibe aus dünnem Blech weist nahe des radial äußeren Randes eine Kröpfung auf, die einen gewissen axialen Versatz zwischen dem radial inneren und äußeren Bereich der Scheibe herstellt, der für die dort beschriebene Konstruktion benötigt wird. Abgesehen von einigen radial innerhalb der Kröpfung liegenden Durchlässen ist die Scheibe frei von Ausnehmungen. Die Scheibe ist im radial äußeren Bereich mittels einer Nietverbindung, d. h. mit einer Anzahl von Nieten, die über den Umfang der Scheibe angeordnet sind, an dem angrenzenden Bauteil befestigt.

Eine ähnliche Lösung ist in der DE 44 02 257 C2 beschrieben. In der DE 100 47 242 C1 wird eine ähnliche Scheibe offenbart, bei der allerdings keine Kröpfung vorgesehen ist.

Es hat sich als nachteilig herausgestellt, dass es bei Scheiben der eingangs genannten Art - die mitunter auch als "Flexplate" bezeichnet werden -, d. h. bei solchen, die eine Kröpfung aufweisen und die radial außen mit einer Nietverbindung mit dem angrenzenden Bauteil verbunden sind, im Bereich der äußeren Anbindung zu einem Kopfzug kommt, der zu Schälungen am Verbindungselement kommen kann, was besonders stark beim Einsatz von Nieten beobachtet wird. Ursache hierfür sind Taumelbewegungen, die die Anordnung im Betrieb ausführt.

Diesem Problem kann dadurch begegnet werden, dass als Verbindungselement die Schraube eingesetzt wird. Diese ist gegenüber Kopfzug wesentlich unempfindlicher als ein Niet. Die Schraubverbindung ist allerdings wesentlich teurer als eine Nietverbindung. Ferner beansprucht die Schraubverbindung mehr Bauraum als die Nietverbindung.

In manchen Fällen kann daher erst durch die Reduktion des Kopfzuges ein Niet spannungsmäßig ausreichend ausgelegt werden. Dies ist allerdings oft konstruktiv problematisch.

Demgemäß liegt der Erfindung die **Aufgabe** zugrunde, eine Scheibe der eingangs genannten Art so fortzubilden, dass es möglich wird, im radial äußeren Bereich der Scheibe die preiswerte Vernietung zur Festlegung der Scheibe an dem angrenzenden Bauteil vorzusehen, dabei jedoch sicherzustellen, dass eine hinreichende Lebensdauer der Verbindung gegeben ist und namentlich Schälungen vermieden werden. Der Kopfzug auf das Verbindungselement soll dabei auch beim Vorliegen von Taumelbewegungen reduziert werden.

Die **Lösung** dieser Aufgabe durch die Erfindung ist dadurch gekennzeichnet, dass im Bereich der Kröpfung der Scheibe mindestens eine Ausnehmung in die Scheibe eingearbeitet ist.

Vorzugsweise ist eine Anzahl Ausnehmungen über den Umfang der Scheibe verteilt angeordnet.

Die Ausnehmung liegt bevorzugt auf einem Radienstrahl, der sich von der Drehachse der Scheibe bis zu der Bohrung für das Befestigungselement erstreckt.

Mit Vorteil besteht die Scheibe aus einem dünnen Blech.

Als Befestigungselement kommt bevorzugt ein Niet zum Einsatz, was entsprechende Kostenvorteile hat.

Für die geometrische Ausbildung der Ausnehmung haben sich verschiedene Lösungen bewährt:

Die Ausnehmung kann als Langloch ausgebildet sein, das sich vorzugsweise in Umfangsrichtung der Scheibe erstreckt.

Die Ausnehmung kann auch oval bzw. elliptisch ausgebildet sein.

Sie kann ferner als sich vorzugsweise in Umfangsrichtung erstreckendes Langloch oder oval ausgebildet sein, wobei die Ausnehmung an mindestens einer Umfangstelle eine radial nach innen oder radial nach außen gerichtete Erweiterung aufweist. Bevorzugt ist dabei eine einzige radial nach innen oder außen gerichtete Erweiterung vorhanden, die in Umfangsrichtung betrachtet mittig in der Ausnehmung angeordnet ist.

Die Erstreckung der Ausnehmung in Umfangsrichtung kann so groß sein, dass die sich von der Drehachse bis zu der Bohrung für das Befestigungselement erstreckenden Radienstrahlen zweier benachbarter Bohrungen die Ausnehmung schneiden.

Ferner kann die Ausnehmung kreisförmig ausgebildet sein.

Sie kann weiterhin die Umrissform eines U aufweisen.

Eine Fortbildung sieht vor, dass Ausnehmungen auf mindestens zwei unterschiedlichen Radien angeordnet sind. In diesem Falle kann vorgesehen werden, dass die auf zwei unterschiedlichen Radien angeordneten Ausnehmungen in Umfangsrichtung versetzt zueinander angeordnet sind.

Da der Kopfzug durch die axiale Ausdehnung, d. h. durch die Kröpfung der Scheibe (d. h. der "Flexplate") insbesondere bei der Taumelbewegung der Vorrichtung, in die sie eingebaut ist, entsteht und der Kopfzug von der Scheibe auf die Befestigungselemente (Niete) übertragen wird, werden also erfindungsgemäß Entlastungs-Ausnehmungen im Bereich der Kröpfung vorgesehen, die die Krafteinleitung gezielt beeinflussen. Wird im Bereich der Kröpfung Material entfernt, können im Anbindungsbereich lediglich Scherkräfte übertragen werden. Das Biegemoment, das die Verbindung stark beansprucht, wird wesentlich reduziert. Hierdurch werden die Befestigungselemente deutlich entlastet. Es ist daher möglich, preiswerte Nietverbindungen zur Befestigung der Scheibe am angrenzenden Bauteil einzusetzen, die dennoch eine hinreichende Lebensdauer aufweist.

Die vorliegende Erfindung eignet sich generell dort, wo eine Scheibe mit Kröpfung stabil und preiswert an ein angrenzendes Bauteil angebunden werden muss.

In der Zeichnung sind Ausführungsbeispiele der Erfindung dargestellt. Es zeigen:
- Fig. 1: in perspektivischer, geschnittener Darstellung einen an die Kurbelwelle eines Verbrennungsmotors angebundenen Rotor, wobei eine drehfeste Verbindung mittels einer Scheibe hergestellt ist,
- Fig. 2: die Scheibe zur Herstellung der drehfesten Verbindung in der Vorderansicht gemäß einer ersten Ausführungsform der Erfindung,
- Fig.3: die Scheibe gemäß Fig. 2 gemäß einer zweiten Ausführungsform der Erfindung,
- Fig.4: die Scheibe gemäß Fig. 2 gemäß einer dritten Ausführungsform der Erfindung,
- Fig.5: die Scheibe gemäß Fig. 2 gemäß einer vierten Ausführungsform der Erfindung,
- Fig. 6: die Scheibe gemäß Fig. 2 gemäß einer fünften Ausführungsform der Erfindung,
- Fig.7: die Scheibe gemäß Fig. 2 gemäß einer sechsten Ausführungsform der Erfindung,
- Fig.8: die Scheibe gemäß Fig. 2 gemäß einer siebten Ausführungsform der Erfindung,
- Fig.9: die Scheibe gemäß Fig. 2 gemäß einer achten Ausführungsform der Erfindung und
- Fig. 10: die Scheibe gemäß Fig. 2 gemäß einer neunten Ausführungsform der Erfindung.

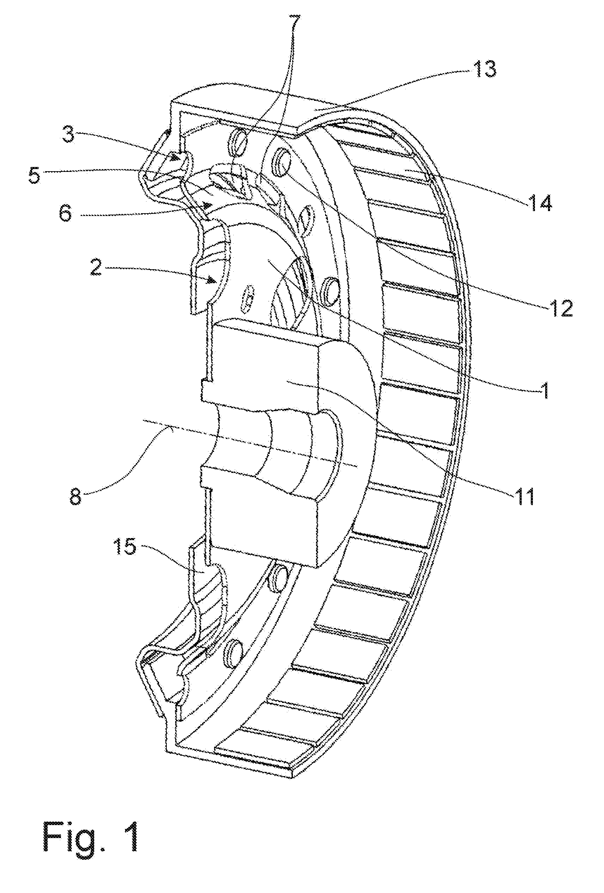

In Fig. 1 ist ein Ausschnitt des Antriebsstranges eines Kraftfahrzeugs zu sehen. Dargestellt ist eine Drehmomentübertragungseinrichtung, bei der ein Kurbelwellenadapter 11 mit der (nicht dargestellten) Kurbelwelle eines Verbrennungsmotors verbunden ist. Mit dem Kurbelwellenadapter 11 drehfest verbunden ist eine Scheibe 1 ("Flexplate") aus dünnem Blech. Diese ist in ihrem radial äußeren Bereich mittels einer Anzahl Nieten 12 mit einem angrenzenden Bauteil drehfest verbunden, im Ausführungsbeispiel mit einem Rotor 13 einer elektrischen Maschine. Der Rotor 13 weist eine Anzahl Magnete 14 auf, die im Zusammenhang mit der vorliegenden Erfindung allerdings keine Bedeutung haben.

Ebenfalls keine weitere Relevanz für die vorliegende Erfindung hat eine drehfest an den Rotor 13 angebundene Scheibe 15 ("Driveplate"). Die Scheibe 15 ist dabei - was nicht dargestellt ist - mit einem Drehmomentwandler drehfest verbunden.

Wie weiter in Fig. 1 gesehen werden kann, ist der radial innere Bereich 2 der Scheibe 1 gegenüber dem radial äußeren Bereich 3 der Scheibe in axiale Richtung a versetzt angeordnet. Der Übergang vom radial inneren zum radial äußeren Bereich wird über eine Kröpfung 5 bewerkstelligt, die in einem Bereich 6 angeordnet ist. Die Kröpfung 5 wird durch eine entsprechende Biegung der Scheibe 1 erzeugt, wie sie aus Fig. 1 ersichtlich ist.

Wesentlich ist, dass im Bereich 6 der Kröpfung 5 mindestens eine Ausnehmung 7 in die Scheibe 1 eingearbeitet ist, wobei die Ausnehmung 7 durch einen Stanzvorgang hergestellt werden kann.

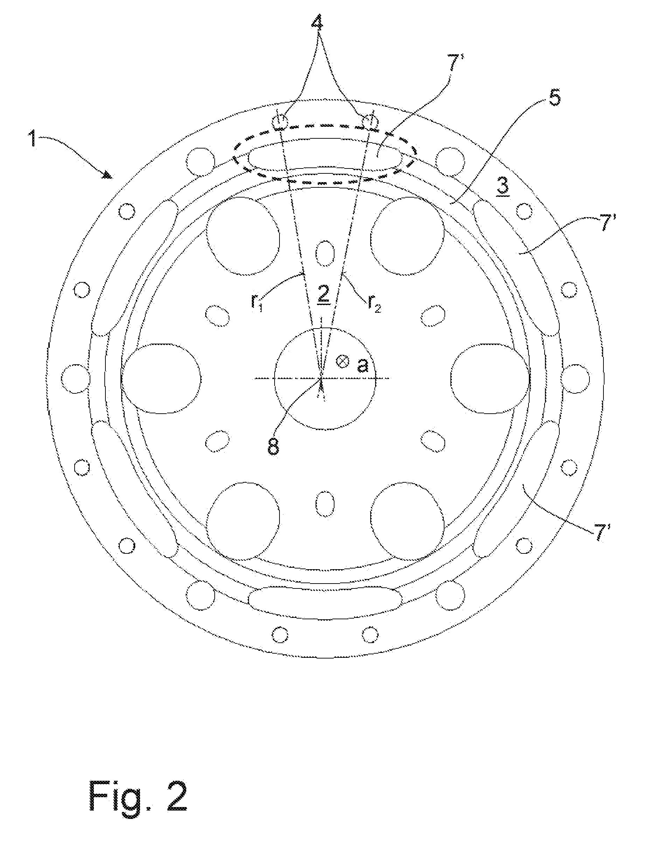

Die verschiedenen bevorzugten Möglichkeiten zur Ausbildung der Ausnehmungen 7 in der Scheibe 1 gehen aus den Ausführungsbeispielen gemäß der Figuren 2 bis 10 hervor.

In Fig. 2 ist zu sehen, dass die Ausnehmungen 7' (s. hier wie in den weiteren Figuren jeweils die Anordnung im gestrichelt eingezeichneten Oval) die Form eines Langlochs aufweist. Ferner ist zu erkennen, dass die Erstreckung der Ausnehmung 7' in Umfangsrichtung der Scheibe 1 so groß ist, dass die Radienstrahlen r₁ und r₂ von zwei benachbarten Bohrungen 4 für den Durchtritt eines Niets zur Drehachse 8 der Scheibe 1 die Ausnehmung 7' schneiden. Hiermit wird eine hinreichende Elastizität der Scheibe 1 im Bereich der Nietanbindung erreicht, um die Kraftentfaltung auf die Nietköpfe so gering zu halten, dass eine stabile Anordnung mit hoher Lebensdauer geschaffen ist. Die rundliche Ausgestaltung der Ausnehmungen 7' stellt sicher, dass die Bauteilspannungen so gering wie möglich bleiben.

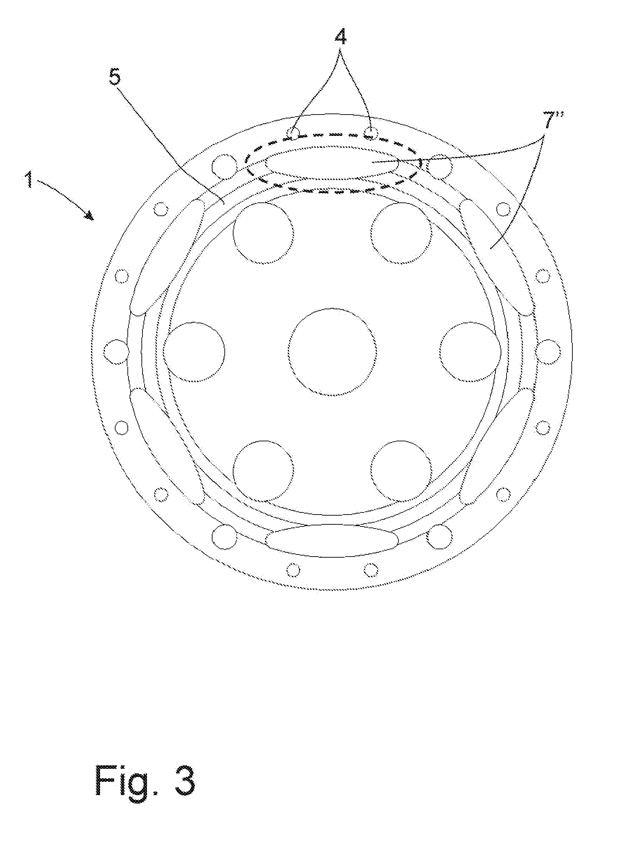

Die Alternative gemäß Fig. 3 sieht eine ähnliche Ausgestaltung der Ausnehmungen vor. Hier haben die Ausnehmungen 7" eine ovale bzw. elliptische Kontur. Wie in Fig. 2 sind eine Anzahl - hier sechs - Ausnehmungen 7" über den Umfang der Scheibe 1 äquidistant verteilt angeordnet. Die Scheibe 1 kann, wie es in den Ausführungsbeispielen gezeigt ist, neben den Ausnehmungen 7 und den Bohrungen 4 für den Durchtritt der Nieten weitere Ausnehmungen aufweisen, die allerdings außerhalb des Bereiche 6 der Kröpfung 5 angeordnet sind und die als solche vorbekannt sind.

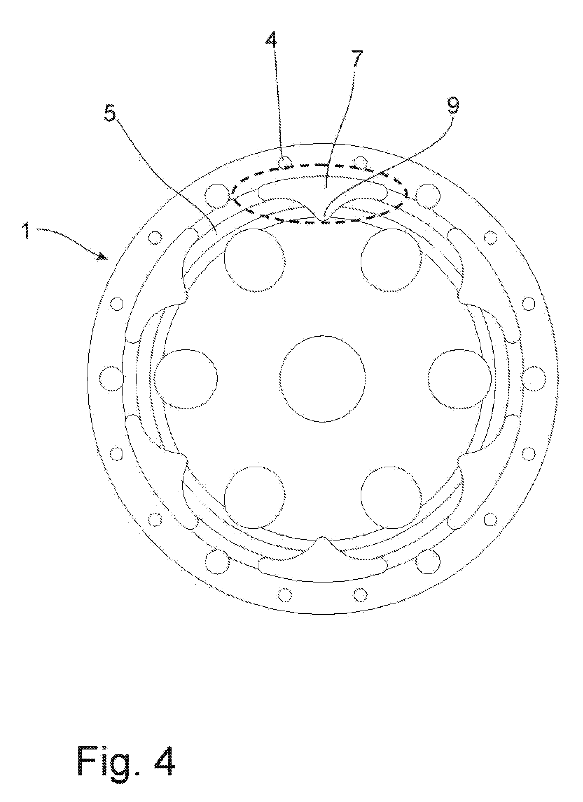

Bei dem Ausführungsbeispiel gemäß Fig. 4 haben die Ausnehmungen 7 wieder eine langlochförmige Kontur, jetzt allerdings weist jede Ausnehmung 7 jeweils eine radial nach innen gerichtete nasenartige Erweiterung 9 auf. Der Bereich 6 der Kröpfung 5 ist damit an gewissen Umfangsstellen vollständig unterbrochen. Durch die Erweiterungen 9 werden Vorteile bei der Taumelweichheit der Scheibe 1 erzielt.

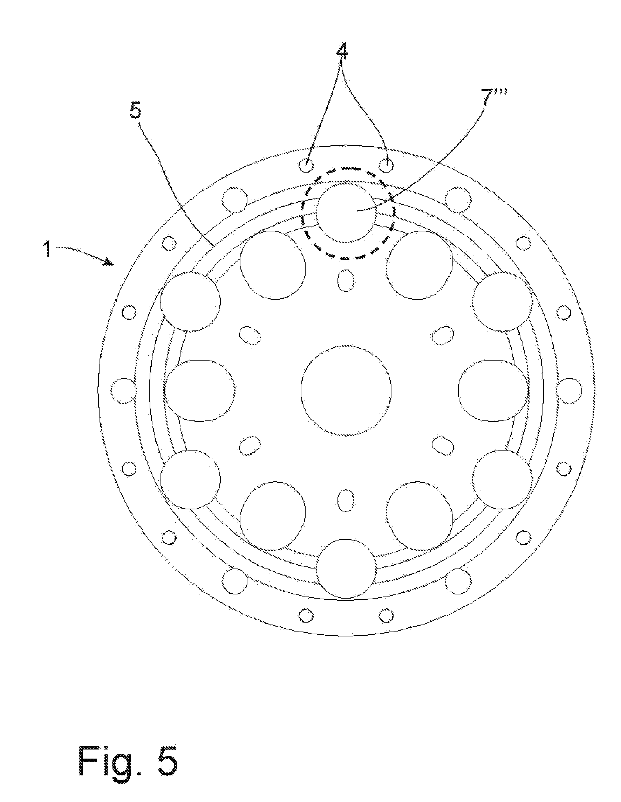

Die Lösung gemäß Fig. 5 zeigt Ausnehmungen 7"' mit kreisförmiger Kontur, die in den Bereich 6 der Kröpfung 5 eingearbeitet sind. Diese Lösung ist fertigungstechnisch sehr einfach und damit kostengünstig. Die Lösung ist insbesondere bei geringer belasteten Anwendungen vorteilhaft.

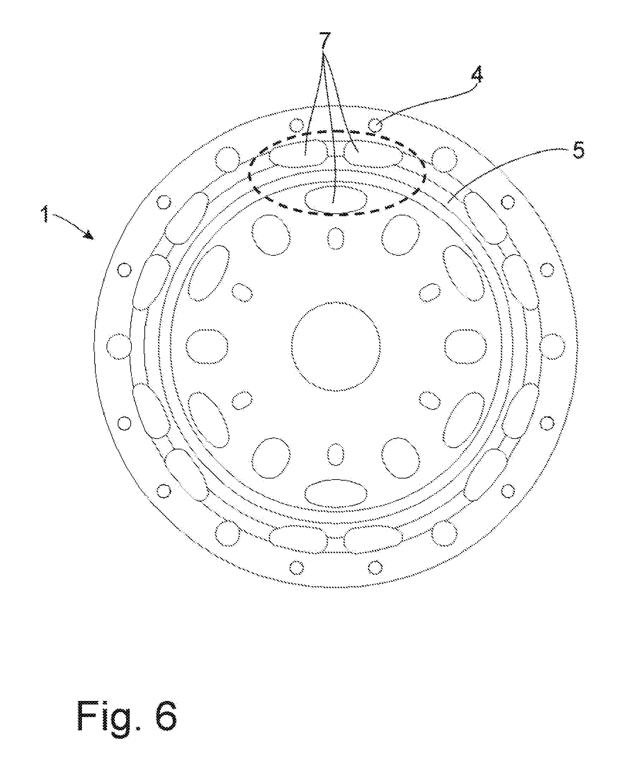

Bei der Ausgestaltung gemäß Fig. 6 ist vorgesehen, dass die Ausnehmungen 7 auf mehreren, nämlich auf zwei verschiedenen Radien im Bereich 6 der Kröpfung 5 angeordnet sind. Hierdurch lässt sich die Belastung der Nieten weiter reduzieren.

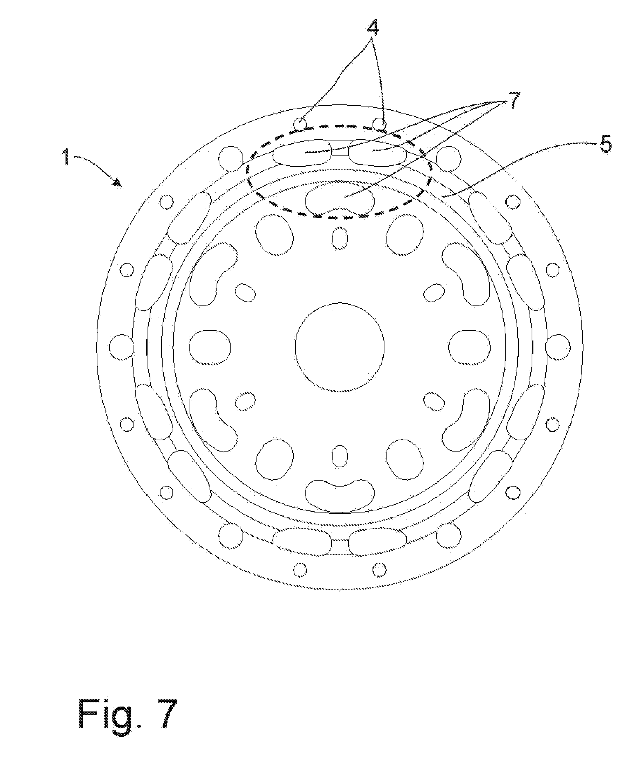

Eine Variante zu Fig. 6 mit nierenförmig ausgebildeten radial inneren Ausnehmungen 7 zeigt Fig. 7.

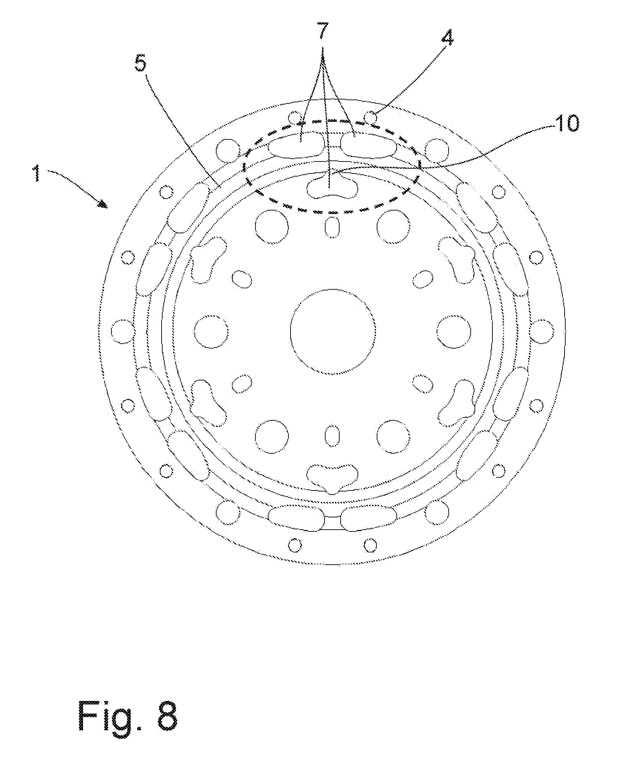

In Fig. 8 ist zu sehen, dass die Ausnehmungen 7 - hier: die radial inneren Ausnehmungen - eine radial nach außen weisende Erweiterung 10 haben können, die analog zu der Erweiterung 9 gemäß Fig. 4 ausgestaltet ist.

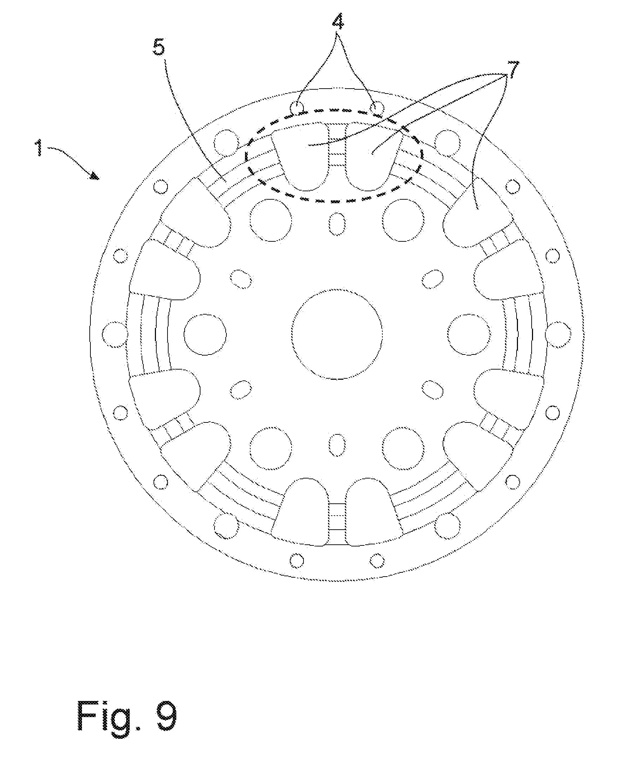

In Fig. 9 ist eine Ausgestaltung der Ausnehmungen 7 zu sehen, die die Umrissform eines U aufweist. Wie zu sehen ist, ist jeder Bohrung 4 zum Durchtritt des Niets eine U-förmige Ausnehmung 7 zugeordnet. Diese Lösung eignet sich besonders für eine weiche Anbindung der Scheibe 1 bei geringen Lasten.

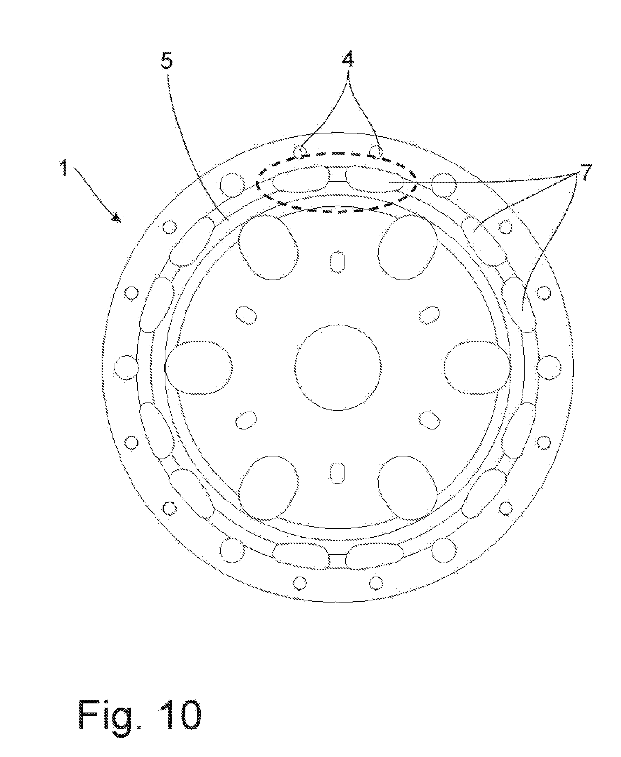

Fig. 10 zeigt eine Stegvariante, die von den Verformungseigenschaften ca. 20 % steifer ist als die Ausgestaltung gemäß Fig. 2.

### Bezugszeichenliste

- 1: Scheibe
- 2: radial innerer Bereich
- 3: radial äußerer Bereich
- 4: Bohrung
- 5: Kröpfung
- 6: Bereich der Kröpfung
- 7: Ausnehmung
- 7': Ausnehmung in Form eines Langlochs
- 7": ovale/elliptische Ausnehmung
- 7"': kreisförmige Ausnehmung
- 7"": Ausnehmung in Form eines U
- 8: Drehachse
- 9: Erweiterung
- 10: Erweiterung
- 11: Kurbelwellenadapter
- 12: Niet
- 13: Rotor
- 14: Magnet
- 15: Scheibe

- a: axiale Richtung
- r₁: Radienstrahl
- r₂: Radienstrahl

## Patentansprüche

1. Scheibe (1) zur Übertragung eines Drehmoments in einer Drehmomentübertragungsvorrichtung eines Kraftfahrzeugs, wobei die Scheibe (1) einen radial inneren Bereich (2) aufweist, der mit einem ersten Bauteil verbindbar ist, wobei die Scheibe (1) einen radial äußeren Bereich (3) aufweist, der mit einem zweiten Bauteil verbindbar ist, wobei die Scheibe (1) zum Verbinden des radial äußeren Bereichs (3) mit dem zweiten Bauteil eine Anzahl Bohrungen (4) für den Durchtritt von Befestigungselementen aufweist und wobei die Scheibe (1) im Bereich zwischen dem radial inneren Bereich (2) und den radial äußeren Bereich (3) eine Kröpfung (5) aufweist, die die beiden Bereiche (2, 3) in axiale Richtung (a) relativ zueinander versetzt,
**dadurch gekennzeichnet,**
**dass** im Bereich (6) der Kröpfung (5) mindestens eine Ausnehmung (7) in die Scheibe (1) eingearbeitet ist.

2. Scheibe nach Anspruch 1, **dadurch gekennzeichnet, dass** eine Anzahl Ausnehmungen (7) vorzugsweise äquidistant über den Umfang der Scheibe verteilt angeordnet ist.

3. Scheibe nach Anspruch 1 oder 2, **dadurch gekennzeichnet, dass** die Ausnehmung (7) auf einem Radienstrahl liegt, der sich von der Drehachse (8) der Scheibe (1) bis zu der Bohrung (4) für das Befestigungselement erstreckt.

4. Scheibe nach einem der Ansprüche 1 bis 3, **dadurch gekennzeichnet, dass** sie aus einem dünnen Blech besteht.

5. Scheibe nach einem der Ansprüche 1 bis 4, **dadurch gekennzeichnet, dass** die Befestigungselemente Niete sind.

6. Scheibe nach einem der Ansprüche 1 bis 5, **dadurch gekennzeichnet, dass** die Ausnehmung (7) als Langloch (7') ausgebildet ist, das sich vorzugsweise in Umfangsrichtung der Scheibe (1) erstreckt.

7. Scheibe nach einem der Ansprüche 1 bis 5, **dadurch gekennzeichnet, dass** die Ausnehmung (7) oval bzw. elliptisch (7") ausgebildet ist.

8. Scheibe nach einem der Ansprüche 1 bis 5, **dadurch gekennzeichnet, dass** die Ausnehmung (7) als sich vorzugsweise in Umfangsrichtung erstreckendes Langloch oder oval bzw. elliptisch ausgebildet ist, wobei die Ausnehmung (7) an mindestens einer Umfangstelle eine radial nach innen gerichtete Erweiterung (9) aufweist.

9. Scheibe nach einem der Ansprüche 1 bis 5, **dadurch gekennzeichnet, dass** die Ausnehmung (7) als sich vorzugsweise in Umfangsrichtung erstreckendes Langloch oder oval bzw. elliptisch ausgebildet ist, wobei die Ausnehmung (7) an mindestens einer Umfangstelle eine radial nach außen gerichtete Erweiterung (10) aufweist.

10. Scheibe nach Anspruch 8 oder 9, **dadurch gekennzeichnet, dass** eine einzige radial nach innen oder außen gerichtete Erweiterung (9, 10) vorhanden ist, die in Umfangsrichtung betrachtet mittig in der Ausnehmung (7) angeordnet ist.

11. Scheibe nach einem der Ansprüche 6 bis 10, **dadurch gekennzeichnet, dass** die Erstreckung der Ausnehmung (7) in Umfangsrichtung so groß ist, dass die sich von der Drehachse (8) bis zu der Bohrung (4) erstreckenden Radienstrahlen zweier benachbarter Bohrungen (4) die Ausnehmung (7) schneiden.

12. Scheibe nach einem der Ansprüche 1 bis 5, **dadurch gekennzeichnet, dass** die Ausnehmung (7) kreisförmig (7"') ausgebildet ist.

13. Scheibe nach einem der Ansprüche 1 bis 5, **dadurch gekennzeichnet, dass** die Ausnehmung (7) die Umrissform eines U (7"") aufweist.

14. Scheibe nach einem der Ansprüche 1 bis 13, **dadurch gekennzeichnet, dass** Ausnehmungen (7) auf mindestens zwei unterschiedlichen Radien angeordnet sind.

15. Scheibe nach Anspruch 14, **dadurch gekennzeichnet, dass** die auf zwei unterschiedlichen Radien angeordneten Ausnehmungen (7) in Umfangsrichtung versetzt zueinander angeordnet sind.
